# EUROPEAN PATENT APPLICATION

(11) **EP 4 697 676 A1**
(43) Date of publication of application: **18.02.2026**
(21) Application number: 24788091.7
(22) Date of filing: 10.04.2024
(51) Int. Cl.: H04L 67/025

(54) **METHOD FOR CONTROLLING TARGET OBJECT BY USING MESH NETWORK, AND OBJECT CONTROL SYSTEM**

(30) Priority: 12.04.2023 CN 202310389561
(71) Applicant: Boe Technology Group Co., Ltd., Beijing 100015 (CN); Beijing BOE Technology Development Co., Ltd., Beijing 100176 (CN)
(72) Inventor: ZHAO, Junjie, Beijing 100176 (CN); SU, Jing, Beijing 100176 (CN); CHEN, Shaobei, Beijing 100176 (CN); FENG, Hongbo, Beijing 100176 (CN)
(74) Representative: Brötz, Helmut
(86) International application number: PCT/CN2024/086972
(87) International publication number: WO 2024/212989

(57) **Abstract**

Provided are a method for controlling a target object by using a MESH network, and an object control system. The method may comprise: a configurator configuring a target object into a MESH network; and sending, by means of the MESH network and to the target object, a control instruction from a digital key corresponding to the target object. In this way, remote control over a target object by using a digital key can be realized.

## Description

This application claims the priority of China invention patent entitled "METHOD FOR CONTROLLING TARGET OBJECT BY USING MESH NETWORK, AND OBJECT CONTROL SYSTEM" filed on April 12, 2023 with the application number of 202310389561.4, the entirety of which is incorporated into this application.

### TECHNICAL FIELD

The present disclosure relates to the field of the Internet of Things, and more specifically, to a method for controlling a target object by using a MESH network, an object control system, a MESH network and a computing device.

### BACKGROUND

With the rapid development of network technology, digital keys are becoming popular. For example, the digital keys are widely used in cars, company access control, home door locks, safes, bicycles and other scenarios.

As an example application, a digital key is a new product of improvements in automobile technology, allowing vehicle owners to use mobile terminals, electronic bracelets, electronic watches and other devices as vehicle keys to achieve operations such as unlocking a vehicle, starting to drive, and controlling the temperature inside the vehicle without a physical key.

Digital keys can use remote control technology (for example, Remote Keyless Entry (RKE)) to transmit data with a target object (such as the vehicle) using lowfrequency signals. In this way, the wavelength of an electromagnetic wave signal is longer and the diffraction effect of the signal is good, so that communication between the digital key and the target object cannot be easily interfered by obstacles.

With the development of communication technology involved in the carrier of the digital keys (such as mobile terminals), in order to be better compatible with various communication protocols, the data communication protocols currently used by the digital keys include near field communication (NFC), Bluetooth low energy (BLE) and ultrawideband (UWB), which all use high-frequency signals for data transmission. However, when the digital keys use high-frequency signals for data transmission to control the target object, they must first establish a communication link with the target object. However, due to the characteristics of high-frequency signals that are easily interfered by obstacles, in places with many obstacles, high-frequency signal transmission is prone to interference, resulting in a significant reduction in the effective distance of the digital keys.

Therefore, there is a need for a solution that enables data communication between a digital key and a target object by using a high-frequency signal even when there are many obstacles.

### SUMMARY

According to a first aspect of the present disclosure, a method for controlling a target object by using a MESH network is provided, the method comprising: configuring, by a configurator, the target object into the MESH network; and sending, to the target object and by using the MESH network, a control instruction from a digital key corresponding to the target object.

According to the second aspect of the present disclosure, a method for controlling a target object by using a MESH network is also provided, the MESH network includes a plurality of objects, the plurality of objects include the target object, the method comprising: receiving, by at least one object in the MESH network and from a digital key corresponding to the target object, a control instruction for the target object; forwarding, by the at least one object, the control instruction to the target object via inter-node links in the MESH network in a case where the at least one object determines that it is not an object targeted by the control instruction.

According to the third aspect of the present disclosure, an object control system is also provided, the system comprising: a configurator, used to configure a target object into a MESH network; and the MESH network, configured to send a control instruction from the digital key corresponding to the target object to the target object.

According to a fourth aspect of the present disclosure, a MESH network is also provided, the MESH network being composed of a plurality of objects, and each object includes: a processor; and a memory having computer-readable instructions stored thereon, wherein the instructions on the memories of the plurality of objects, when executed, cause the processors of the plurality of objects to collectively perform the method of the second aspect above.

Therefore, through the method for controlling the target object by using the MESH network according to the present disclosure, a plurality of objects including the target object can be configured into a same MESH network, so that even if the digital key cannot communicate with the target object over high-frequency communication links (for example, BLE links, NFC links or UWB links) due to interference from obstacles, etc., as long as the control instruction sent by the digital key can be sent to an object in the MESH network, the control instruction can be forwarded to the target object based on the inter-node links in the MESH network, thereby achieving control of the target object. Therefore, remote control of the target object by the digital key can be achieved.

### BRIEF DESCRIPTION OF DRAWINGS

In order to explain the embodiments of the present disclosure or the technical solutions in the prior art more clearly, the drawings needed to be used in the description of the embodiments of the present disclosure or the prior art will be briefly introduced below. Obviously, the drawings in the following description are only some embodiments described in the present disclosure. For those of ordinary skill in the art, other drawings can also be obtained based on these drawings of the embodiments of the present disclosure.
FIG. 1 shows a schematic diagram of a scenario in which a digital key cannot establish a high-frequency communication with a vehicle.
FIG. 2 shows a schematic diagram illustrating a system in which a vehicle is controlled using a digital key according to embodiments of the present disclosure.
FIG. 3 shows a schematic flowchart of a method for controlling a target object by using a MESH network according to an embodiment of the present disclosure.
FIG. 4 shows sub-steps of step S320 in the method of FIG. 3.
FIG. 5 shows a schematic flowchart of a method for controlling a target object by using a MESH network according to another embodiment of the present disclosure.
FIG. 6 and FIG. 7 exemplarily describe an interaction process of the digital key, a configurator and each object (vehicle 1 and vehicle 2), respectively.
FIG. 8 shows a schematic diagram of an exemplary preset network configuration method.
FIG. 9 shows a schematic flowchart of a method for controlling a target object by using a MESH network according to another embodiment of the present disclosure.
FIG. 10 and FIG. 11 show schematic diagrams of forwarding a control instruction via inter-node links in the MESH network, respectively.
FIG. 12 shows a schematic diagram of a model provided at a node for mutual control of the whistle operation between the nodes.
FIG. 13 shows a schematic block diagram of an object control system according to embodiments of the present disclosure.
FIG. 14 shows a schematic block diagram of a computing device according to embodiments of the present disclosure.

### DETAILED DESCRIPTION

The technical solutions in the embodiments of the present disclosure will be clearly and completely described below with reference to the drawings in the embodiments of the present disclosure. Obviously, the described embodiments are only some of the embodiments of the present disclosure, not all of the embodiments. Based on the embodiments in the present disclosure, all other embodiments obtained by those of ordinary skill in the art without inventive efforts fall within the protection scope of the present disclosure.

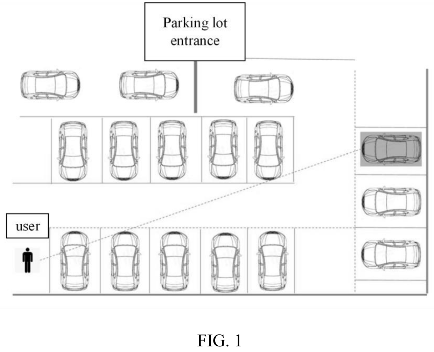

As mentioned above, in places with many obstacles, the transmission of high-frequency signals is easily interfered, so the digital key may not be able to control its corresponding target object. FIG. 1 shows a schematic diagram of a scenario in which a digital key cannot establish a high-frequency communication link with a vehicle.

FIG. 1 shows a schematic diagram of a parking lot, where a target vehicle (the vehicle shown by shade) is located far away from the user (whose mobile terminal has a corresponding digital key). Because there are many obstacles in the parking lot, the user's mobile terminal cannot establish a high-frequency communication link (e.g., a BLE Bluetooth link) with the target vehicle, which makes it impossible to use the digital key at the mobile terminal to control the target vehicle (such as unlocking, controlling an air conditioner to turn on) or find the location of the target vehicle, etc.

In order to solve the above problems, the present disclosure proposes a solution that uses a wireless mesh network (MESH network) to control the target object, so that when the digital key and the target object cannot communicate directly via the high-frequency communication link, the communication of the digital key and the target object can be implemented by using the MESH network.

The MESH network may include multiple network nodes (which may be referred to as nodes for brevity), and each network node may be a device with processing and communication functions. There is a direct or indirect communication link between any two network nodes, i.e. messages can be transmitted between any two network nodes either directly or indirectly (via a relay node). The communication between network nodes belongs to high-frequency communication, for example, based on BLE technology. In this case, the MESH network can be represented as a BLE MESH network. Alternatively, the MESH network can also be a WIFI MESH network or Zigbee MESH network, etc.

In addition, the MESH network can include a single network or multiple networks (called subnets). In the case of including multiple subnets, from the concept of the network layer, one network key (NetKey) can correspond to one subnet, nodes with the same network key belong to a same subnet, and nodes that do not belong to a subnet cannot relay messages within the subnet.

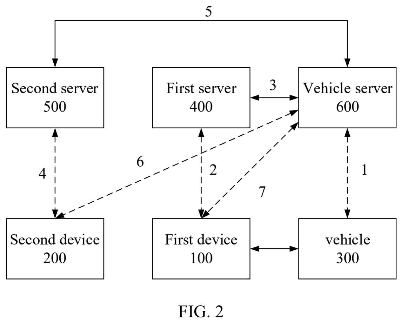

FIG. 2 shows a schematic diagram illustrating a system in which a vehicle is controlled using a digital key according to embodiments of the present disclosure.

As shown in FIG. 2, the system includes a first device 100, a second device 200, a vehicle 300 (as a specific example of a target object to be controlled by the digital key), a first server 400 for the first device 100 and a second server 500 for the second device 200 and a vehicle server 600 for the vehicle 300. The first device 100 and the second device 200 may communicate point-to-point directly or via a server.

For example, the communication of the first device with the second device may be via: link 2 between the first device and the first server, links (3, 5) between the first server and the second server, and link 4 between the second server and the second device, for example, the digital key can be shared with the second device, the second device can be provided with configuration information that can be set at the first device, and so on. The first device communicates with the first server 400 via link 2, and the second device communicates with the second server via link 4. The first device/second device may also communicate directly with the vehicle server via link 6/link 7, or may communicate indirectly with the vehicle server via link 2/link 3 and link 4/link 5 through respective servers respectively. The first server 400 and the second server 500 are each responsible for managing the life cycle of the digital key (the cycle of data), and updating, deleting, suspending, and restoring the certificate in the first device/the second device through link 2/link 4, respectively. Servers 400 and 500 can provide and update necessary certificates, load and install digital key instances, and allow digital keys to be disabled and deleted. The vehicle server 600 can create pairing passwords, sign public keys, provide certificates to devices, manage keys, provide the sharer with necessary authentication data, issue legitimate sharer digital key structures, etc.

The first device, the second device, and the vehicle may each include a module for high-frequency communication, such as an NFC module, a BLE module, and a UWB module, so that the first device and the second device can control the vehicle through high-frequency communication.

The first device 100 and the second device 200 can each be various types of mobile electronic devices capable of data processing and sending and receiving, such as mobile phones, tablet computers, smart watches, smart bracelets, smart glasses and other devices, and application programs can be installed on them, so that they can interact with the servers through the application programs.

Server 400 or 500 or 600 includes, but is not limited to, implementations such as a network host, a single network server, a collection of multiple network servers, or a collection of cloud computing-based computers. Here, the cloud is composed of a large number of hosts or network servers based on cloud computing, where cloud computing is a type of distributed computing, consisting of a group of loosely coupled computers as a virtual computer.

When the first device or the second device needs to control the vehicle (smart vehicle), it sends the generated digital key to the vehicle. After receiving the digital key from the device, the vehicle verifies the information included in the digital key, and operates according to a control instruction after the verification is passed, such as unlocking the vehicle or turning on the air conditioner, etc.

As mentioned previously, when the first device or the second device cannot achieve the high-frequency communication link with the vehicle, the structure of the system may need to be improved.

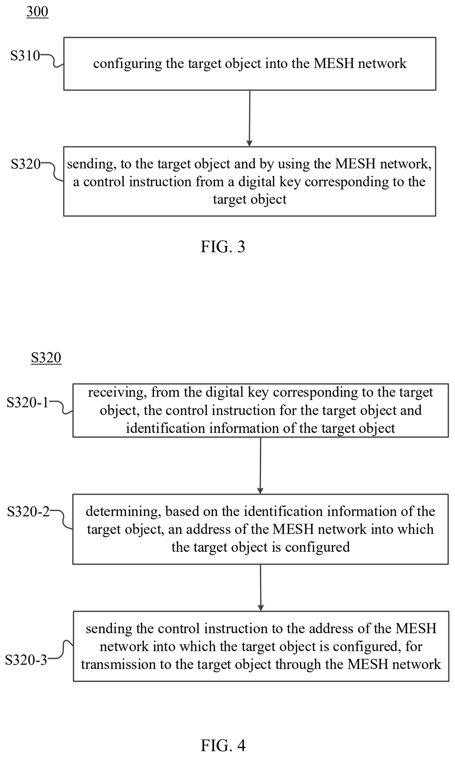

The solution of using a wireless mesh network (MESH network) to control a target object according to the embodiment of the present disclosure will be described in detail below with reference to FIG. 3 to FIG. 13.

It should be noted that in the context of the present disclosure, in order to simplify the description, reference to a digital key may refer to a device carrying the digital key, for example, "the digital key sending information" means sending information through the device carrying the digital key, "the digital key being configured into the MESH network" means that the device carrying the digital key is configured into the MESH network, etc.

FIG. 3 shows a schematic flowchart of a method for controlling a target object by using a MESH network according to an embodiment of the present disclosure. At least part of the method shown in FIG. 3 may be performed by a configurator. The configurator may, for example, engage in high-frequency communication with the target object under predetermined conditions (e.g., the distance is close enough), thereby configuring the target object into the MESH network. For example, the configurator can be a gate machine (configured with a MESH network configuration function) at an entrance of a parking lot. Within a short time period when the vehicle enters the parking lot, the configurator can complete the network configuration operation for the vehicle, and then the vehicle leaves the entrance of the parking lot and enters the parking lot.

As shown in FIG. 3, in step S310, the configurator configures the target object into the MESH network.

For example, the configurator may receive network engagement related information sent by the target object. For example, the configurator may receive a broadcast frame sent by the target object, and the broadcast frame carries network engagement related information of the target object. The configurator may then configure the target object into the MESH network based on the network engagement related information of the target object.

Optionally, if the target object that sent the broadcast frame has not been configured into the MESH network (in some cases, the target object may continue to send broadcast frames which are received by the configurator even if the MESH network is successfully configured), the configurator determines that the target object is expected to be configured into the MESH network (i.e., configures the MESH network), thereby performing subsequent operations of configuring the MESH network for the target object.

Optionally, the network engagement related information of the target object may include various types of information of the target object, such as identification information (such as an identifier), brand, model or year of the target object, etc.

For example, as an example, in the case where the target object is a vehicle, a BLE MESH configurator (for example, integrated with a gate machine) can be installed at an entrance of a parking lot, and the BLE MESH configurator receives a Beacon (Beacon) broadcast by the vehicle. The Beacon includes network engagement related information of the target object.

For example, the BLE MESH configurator may initiate a MESH network configuration function, i.e. discovering a beacon broadcast by the vehicle, in response to detecting the license plate of the vehicle currently entering the parking lot.

Optionally, the network engagement related information in the beacon may include the following: beacon type (e.g., non-temporary device beacon type (0x00)), device identifier UUID (for uniquely identifying the device), out-of-band (OOB) information (for indicating the availability of out-of-band (OOB) data), and uniform resource identifier (URI) information (indicating vehicle-related information). For example, a part of an example of a beacon structure transmitted by the vehicle is as follows:
Device UUID: 70cf7c9732a345b691494810d2e9cbf4
OOB: Number, Inside Manual
OOB Information: 4020
URI: https://www.ABC.com/mesh/products/def.

In this example, at least the URI information and the device identifier UUID can be considered as the network engagement related information of the vehicle. For example, based on the URI information, it can be determined that the manufacturer of the vehicle is ABC and the model is def.

Optionally, after determining that the target object is to be configured into the MESH network, the configurator may receive the identity authentication information sent by the target object and authenticate the identity authentication information before configuring the MESH network. Optionally, the authentication can be performed through an output OOB manner or an input OOB manner. For example, in the output OOB manner, the vehicle as the target object can display a multi-digit random number, or the vehicle sends a multi-digit random number to the configurator through sound or light, and the configurator generates OOB authentication information through the obtained random number. In the input OOB manner, the configurator generates a multi-digit random number, and the user enters the multi-digit random number through the vehicle input device.

Optionally, the configurator and the target object can also perform public key interaction to first calculate a symmetric encryption key using an asymmetric key method, and then use the calculated symmetric encryption key to perform subsequent encryption and decryption between messages that need to be exchanged.

For example, since the MESH network is expected to include a plurality of objects (each object corresponds to a network node, so "node" and "object" in the MESH network can also be used interchangeably herein), a plurality of objects including the target object can be configured into the MESH network according to a preset network configuration manner. For example, the preset network configuration manner may include any of the following: a same MESH network includes objects from a same manufacturer; a same MESH network includes objects of a same brand; a same MESH network includes objects of a same model; each MESH network includes a same number of objects; each MESH network includes an increasing number of objects; and respective locations in an object distribution map are pre-grouped, and objects at the locations of each group belong to a same MESH network. For example, it is determined that the manufacturer is ABC based on the URI information of the target object, so it can be configured into a MESH network including objects all produced by manufacturer ABC, or as the first object of a new MESH network corresponding to manufacturer ABC. Optionally, the above preset network configuration manners can also be combined. For example, there are 20 vehicles produced by manufacturer ABC, which are evenly distributed to two MESH networks of the same number, that is, there are 10 vehicles produced by manufacturer ABC in each MESH network. For another example, the configurator (such as the gate machine) provides a specific parking space for each vehicle, and the configurator can combine with a parking space distribution map to construct the MESH network according to the parking space distribution map.

In addition, after successfully configuring the MESH network, the configurator may also notify the digital key corresponding to each object of the plurality of objects of the address information about the MESH network into which the target object is configured. For example, the notification is via a high-frequency communication link (e.g. the BLE link may be maintained because the vehicle and the configurator are in close proximity for a short time period after successful network configuration), or the application program of the digital key maintains a communication connection with the server of the configurator, so the configurator can inform the digital key of this address information via its server. Alternatively, each object, when successfully configured into the MESH network, can also notify its corresponding digital key of the address information of the MESH network into which it is configured, for example, at this time, generally the object still maintains a high-frequency communication link with its corresponding digital key (for example, the vehicle owner is still in the vehicle for a short time period after the successful network configuration, the digital key and the vehicle may still remain BLE connected).

In addition, optionally, regarding the process of network configuration for each object in the MESH network, for each object, the configurator can determine the MESH network corresponding to the object according to the preset network configuration manner based on the network engagement related information of the object (such as mentioned above); and communicate with the object to transmit, to the object, network configuration data of the MESH network to which the object corresponds, thereby configure the object into the MESH network. Optionally, the communication between the configurator and the vehicle during the network configuration process is via the high-frequency communication link, such as BLE, because the two are relatively close together during network configuration.

For example, the configurator can send a connection request and a network configuration request (including network configuration data) to the object, and the object engages in the MESH network based on the network configuration data after receiving the network configuration data. Optionally, the network configuration data may include a network key (used to indicate at the network layer a MESH subnet to which the object is configured of the MESH network) or a unicast address (i.e., a unique address assigned to the object).

In this way, objects in the same MESH subnet can communicate directly or indirectly, and objects in a MESH subnet cannot communicate to objects in other MESH subnets. In the present disclosure, the MESH network may include multiple MESH subnets (each subnet corresponds to a groupcast address), and the control of the target object included in one MESH subnet is mainly described, so in the present disclosure "the MESH network" and "the MESH subnet" can be used interchangeably.

When performing this step, the target object (such as a vehicle) is generally in close proximity to the configurator and the digital key, for example, the configurator is located at an entrance of a parking lot, and the MESH network configuration function is initiated in response to a license plate recognition system (which can be integrated with the configurator) detecting a license plate, so the vehicle is already close to the configurator at present, so that the vehicle can communicate with the configurator at high frequency, such as through a BLE link, and its broadcast frames can be received by the configurator. In addition, the user is also inside the vehicle at present, so the digital key at the user's mobile terminal can also establish a high-frequency communication link with the vehicle's communication module and configurator at present for communication. Based on this, the configurator can send network configuration data to the vehicle, and after successful network configuration, the vehicle or the configurator can notify the digital key of the address information of the MESH network into which the vehicle is configured. A communication connection between the digital key and the configurator may also be established through a server. After the user leaves the vehicle, the high-frequency communication link between the vehicle and the digital key is broken, but the digital key and the configurator can communicate through the server even if they cannot directly communicate at high frequency, so the configurator can still receive a control instruction for the target object from the digital key. For example, the digital key and the configurator correspond to the same server, e.g., the application program or client of the digital key and the application program or client of the configurator interact with the same server, or the digital key and the configurator correspond to separate servers with a communication link.

In step S320, a control instruction from the digital key corresponding to the target object is sent to the target object through the MESH network.

Optionally, when the digital key needs to send the control instruction to the target object, it can determine in advance whether it can communicate directly with the target object through a high-frequency communication link, for example, usually when the user knows the location of the vehicle and does not need to find the vehicle or when the distance is short or obstacles do not affect communication. When it is determined that direct communication with the target object cannot be achieved, a control instruction is sent to the target object through the MESH network. Of course, it is also possible to directly send the control instruction to the target object through the MESH network without predetermining whether it can communicate directly with the target object through the high-frequency communication link.

In some embodiments, the digital key does not serve as one network node of the MESH network, that is, the digital key is located outside the MESH network, so the digital key sends the control instruction to the MESH network (for example, it can be sent to a node (object) closest to it in the MESH network), and then sends the control instruction to the target object through inter-node links in the MESH network. The inter-node links in the MESH network are high-frequency communication links, such as BLE links.

Optionally, FIG. 4 shows various sub-steps of step S320.

In sub-step S320-1, the configurator may receive, from the digital key corresponding to the target object, the control instruction for the target object and identification information of the target object, and then in sub-step S320-2, determine, based on the identification information of the target object, an address of the MESH network into which the target object is configured.

Since after configuring the MESH network, the configurator can save the correspondence between the target object and the MESH network into which the target object is configured, for example, the correspondence between the identifier of the target object and the address of the MESH network. Therefore, after receiving identification information of the target object (identifier or UUID or unicast address, etc.) from the digital key, it can be determined that the control instruction needs to be sent to the address of the MESH network into which the target object is configured. Optionally, the identification information of the target object may be included in the control instruction for the target object.

Then, in sub-step S320-3, the configurator sends the control instruction to the address of the MESH network into which the target object is configured, so as to be sent to the target object through the MESH network.

For example, when the configurator sends the control instruction to the MESH network, it may directly send the control instruction to the target object in the MESH network, while in other cases, when the configurator sends the control instruction to the MESH network, it cannot directly send the control instruction to the target object in the MESH network, but directly sent the control instruction to a second object in the MESH network, so the control instruction can be forwarded or relayed to the target object via the second object. The present disclosure does not discuss the situation where the configurator cannot send the control instruction to any object in the MESH network due to link limitations, that is, the configurator sends the control instruction to the address of the MESH network, and at least one object (such as objects close to the configurator) in the MESH network can receive the control instruction.

Optionally, in other embodiments, the digital key can also be added to the MESH network, so that the control instruction can be sent to the target object via at least one node (object) in the MESH network between the digital key and the target object.

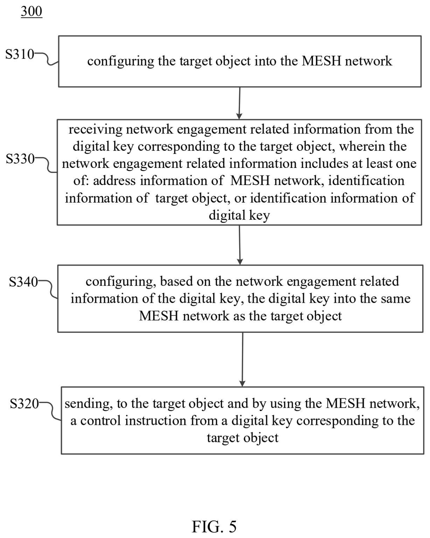

In this case, as shown in FIG. 5, the method 300 may further include the following steps.

In step S330, the configurator receives network engagement related information from the digital key corresponding to the target object, wherein the network engagement related information of the digital key includes at least one of the following: address information of the MESH network, identification information of the target object, or identification information of the digital key.

For example, before the target object is configured into the MESH network by the configurator, the digital key corresponding to the target object and the target object establish a high-frequency communication link (for example, the user is located inside the vehicle, so that the user's mobile terminal and the vehicle can establish a BLE link), and after the target object is configured into the MESH network, the target object can send and notify the address information of the MESH network to the digital key based on the high-frequency communication link. In response to the notification, after determining that the corresponding target object is successfully configured into the MESH network, the digital key can send a network engagement request to the configurator (for example, through a broadcast frame), and the network engagement request can carry the network engagement related information of the digital key, so that the configurator can configure the digital key into the same MESH network as the target object based on the network engagement related information of the digital key.

In step S340, based on the network engagement related information of the digital key, the digital key is configured into the same MESH network as the target object.

For example, the configurator can save the correspondence between the target object and the MESH network into which the target object is configured. Therefore, after receiving the network engagement related information from the digital key, it can determine the MESH network into which the target object is configured based on the network engagement related information (i.e., the address of the MESH network into which the target object is configured), and configure the digital key into the MESH network corresponding to the address. Alternatively, since the digital key knows the MESH network into which the target object is configured, the address information of the MESH network can be sent directly to the configurator. Alternatively, the configurator can also store the correspondence between the identification information of the digital key and the identification of the target object, so that the MESH network into which the digital key needs to be configured can also be indirectly determined based on the identification information of the digital key. Optionally, the configurator can also send network configuration data to the digital key so that the digital key can be configured into the corresponding MESH network.

In this way, for step S320, when the digital key needs to send the control instruction to the target object by using the MESH network and it is an object (node) in the MESH network, the digital key sends the control instruction to the target object via at least one object in the MESH network.

For example, if the digital key cannot directly send the control instruction to the target object in the MESH network, it can send the control instruction to at least one object in the MESH network with which the digital key can communicate, and then the at least one object continues to send the control instruction to at least one second object in the MESH network with which the at least one object can communicate, until the control instruction is received by the target object. Then the target object will not forward the control instruction. Usually, the control instruction can carry the indication information of the target object (that is, the identification information, such as the identifier or the unicast address as mentioned above), or the control instruction can be sent separately from the indication information of the target object. If an object determines that it is not the object targeted by the control instruction based on the received indication information of the target object, then forward the control instruction (and/or the indication information of the target object) to the object with which it can communicate.

Therefore, through the method for controlling a target object by using a MESH network described above with reference to FIG. 3 to FIG. 5, a plurality of objects including the target object can be configured into the same MESH network, so that even if the digital key cannot communicate directly with the target object via the high-frequency communication link (e.g., BLE link, NFC link or UWB link), as long as the control instruction sent by the digital key can be sent to an object in the MESH network, it can be forwarded to the target object based on the inter-node links in the MESH network, thereby achieving control of the target object. Therefore, remote control of the target object can be achieved.

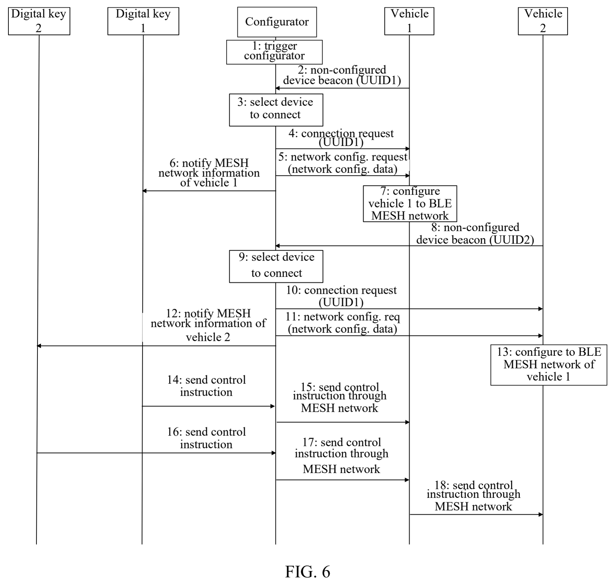

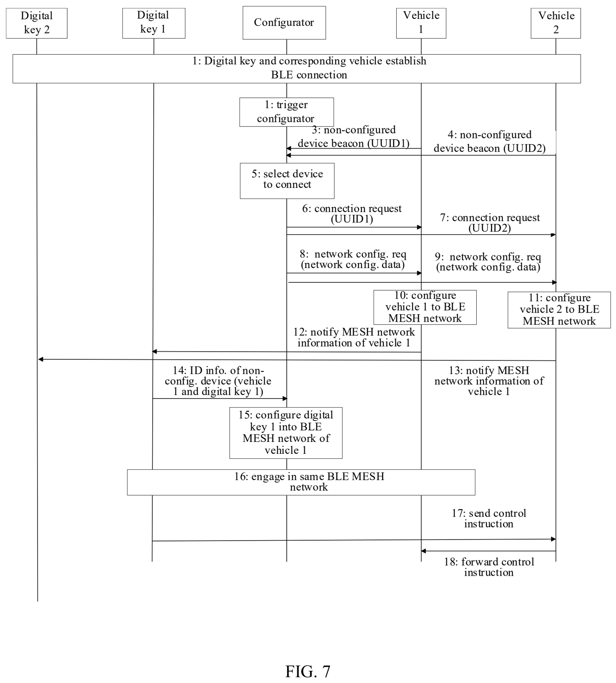

In order to better describe the process of controlling the target object by using the MESH network, the interaction process of the digital key, the configurator and each object is exemplarily described below with reference to FIG. 6 to FIG. 7. Among them, the object is a vehicle as an example, and a BLE MESH configurator (used to configure a BLE MESH network) is installed at the gate machine of an entrance of a parking lot. FIG. 6 applies to the case where the digital key does not act as a node of the MESH network, and FIG. 7 applies to the case where the digital key acts as a node of the MESH network.

As shown in FIG. 6, in process 1, in response to, for example, a vehicle identification system detecting vehicle 1, the BLE MESH configurator is triggered to initiate a MESH network configuration operation.

In process 2, the BLE MESH configurator receives beacons sent by vehicle 1, which include the network engagement related information of the vehicle. The specific information of the beacons sent by the vehicle has been described above.

In process 3, the BLE MESH configurator determines, based on the received beacon, that vehicle 1 has not been configured into a MESH network and therefore needs to be connected and network-configured. Or, if multiple vehicles are sending beacons at the same time, the BLE MESH configurator can determine each vehicle to be connected and network-configured based on respective received beacons. For example, in process 4, the BLE MESH configurator may send a connection request (which may include the identifier UUID1 of vehicle 1) to vehicle 1, and in process 5 send a network configuration request (including network configuration data) to vehicle 1. For example, the network configuration data sent by BLE MESH configurator to vehicle 1 may include network key, and unicast address, etc.

In process 6, after the BLE MESH configurator sends the network configuration data to vehicle 1, the BLE MESH configurator can send the MESH network information of vehicle 1 to the digital key.

In process 7, vehicle 1 may perform network configuration operations based on the received network configuration data, thereby being configured into the MESH network, for example, a MESH network into which vehicles having the same brand as vehicle 1 are configured.

Processes 8-12 are directed to the network configuration of vehicle 2 and are essentially the same as processes 2-6.

In process 13, both vehicle 2 and vehicle 1 are configured into the same MESH network (for example, vehicle 2 and vehicle 1 have the same brand).

In process 14, the digital key 1 corresponding to the vehicle 1 communicates with the BLE MESH configurator, and the digital key 1 sends a control instruction and the identification information of the vehicle 1 to the BLE MESH configurator (the identification information of the vehicle 1 may be the UUID1 of the vehicle 1).

In process 15, the BLE MESH configurator obtains the address of the BLE MESH network into which vehicle 1 is configured based on the identification information of vehicle 1, and then sends the control instruction to the address of the BLE MESH network. It is assumed that the control instruction can be sent directly to vehicle 1 to control vehicle 1.

Similarly, in process 16, the digital key 2 corresponding to the vehicle 2 communicates with the BLE MESH configurator, and the digital key 2 sends a control instruction and identification information of the vehicle 2 to the BLE MESH configurator.

In process 17, the BLE MESH configurator obtains the address of the BLE MESH network where vehicle 2 is configured based on the identification information of vehicle 2, and then sends the control instruction to the address of the BLE MESH network. It is assumed that the control instruction cannot be sent directly to vehicle 2 but are sent directly to vehicle 1, so the control instruction can be forwarded to vehicle 2 via vehicle 1 in process 18 to control vehicle 2.

It can be seen that through the interaction process between the digital key, configurator and various objects shown in FIG. 6, when vehicle 1 and vehicle 2 cannot directly receive control instruction from the digital key, the control instruction can be sent to vehicle 1 and vehicle 2 through the MESH network.

In addition, in the case of the digital key serving as a node of the MESH network, multiple processes as shown in FIG. 7 may be involved.

As shown in FIG. 7, in process 1, the digital key first establishes a high-frequency communication link (for example, a BLE link) with its corresponding vehicle. That is, vehicle 1 establishes the high-frequency communication link with digital key 1, and vehicle 2 establishes the high-frequency communication link with digital key 2.

Then, the processes 2-11 are the processes of configuring the vehicle 1 and the vehicle 2 into the network, which are the same as the corresponding processes described with reference to FIG. 6, so the description will not be repeated here. In addition, although the interaction process between vehicle 1 and the BLE MESH configurator and the interaction process between vehicle 2 and the BLE MESH configurator are overlapped shown in FIG. 7 for the convenience of drawing, vehicle 1 and vehicle 2 can enter the parking lot at a time period apart, so it can be the case that after the configuration of the MESH network for vehicle 1 is successful, vehicle 2 enters the parking lot and the BLE MESH configurator starts configuring the MESH network for vehicle 2.

In process 12, vehicle 1 may send the address information of the MESH network of the vehicle 1 to digital key 1 via the high-frequency communication link, and in process 13, vehicle 2 may send the address information of the MESH network of vehicle 2 to digital key 2 via the high-frequency communication link. Or, as an alternative, the configurator may also send the address information of respective MESH networks of vehicle 1 and vehicle 2 to the corresponding digital keys. It is assumed that both vehicle 2 and vehicle 1 are configured into the same MESH network (for example, vehicle 2 and vehicle 1 have the same brand).

In process 14, the digital key 1 corresponding to vehicle 1 communicates with the BLE MESH configurator, or the digital key 1 sends a broadcast frame (such as a beacon) to the BLE MESH configurator, to send the identification information of the digital key 1 and the identification information of vehicle 1 to the BLE MESH configurator.

In process 15, the BLE MESH configurator configures the digital key into the same MESH network as vehicle 1 based on the received identification information. For example, although not shown, the BLE MESH configurator may also send a connection request, a network configuration request, etc. to the digital key, and the digital key may also receive network configuration data, etc.

Thus, in process 16, digital key 1, vehicle 1 and vehicle 2 are configured into the same MESH network.

In process 17, since digital key 1 cannot directly send a control instruction to vehicle 1, it sends the control instruction to vehicle 2 in the same MESH network through the inter-node links of the MESH network. Then in process 18, vehicle 2 forwards the control instruction to vehicle 1, realizing the control of vehicle 1 by digital key 1.

It can be seen that through the interaction process between the digital key, configurator and each object shown in FIG. 7, the digital key is also added to the MESH network where its corresponding vehicle is located, so when the digital key cannot directly send the control instruction to its corresponding vehicle, the control instruction can be forwarded to the corresponding vehicle through other vehicles in the MESH network.

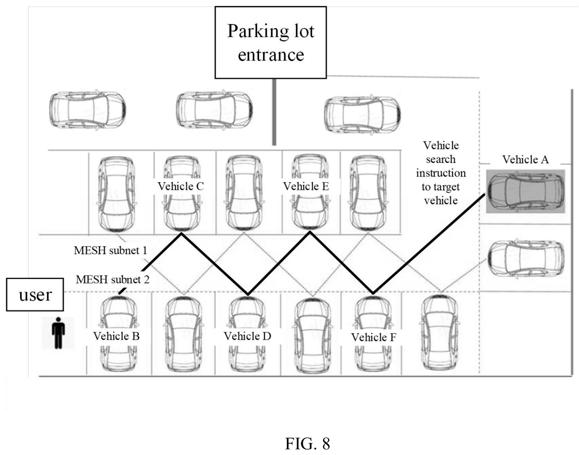

For example, as shown in FIG. 8, the configurator (such as a gate machine) provides a specific parking space for each vehicle. The configurator can combine with a parking space distribution map and construct two MESH subnets (MESH subnet 1 and MESH subnet 2) according to the parking space distribution map. The two MESH subnets each correspond to vehicles parked in a group of parking spaces (shown as dotted lines and solid lines in the figure). Vehicle A (shown by shade), to which the digital key (as a node of MESH subnet 2) cannot directly send a control instruction, is configured into MESH subnet 2, so the control instruction issued by the digital key can pass through, for example, vehicle B, vehicle C, vehicle D, vehicle E and vehicle F in the MESH subnet 2 to reach vehicle A.

According to another aspect of the present disclosure, a method for controlling a target object by using a MESH network is also correspondingly disclosed. The MESH network may include a plurality of objects configured by the configurator as described above, and the plurality of objects include the target object.

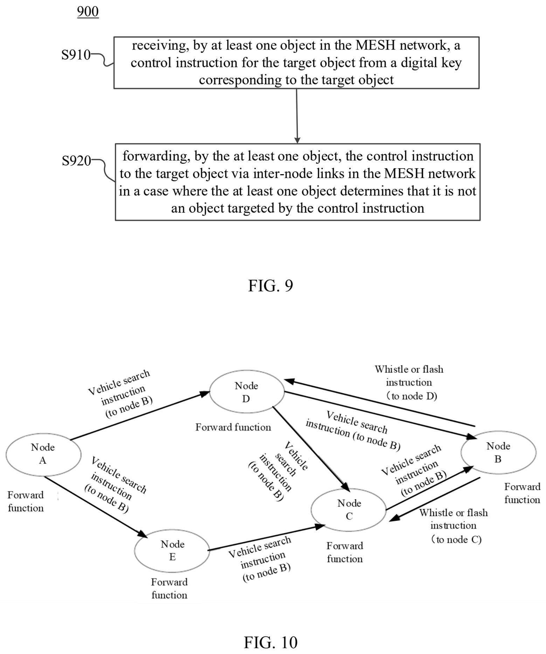

FIG. 9 shows a schematic flowchart of a method for controlling a target object by using a MESH network according to embodiments of the present disclosure.

As shown in FIG. 9, in step S910, at least one object in the MESH network receives, from a digital key corresponding to a target object, a control instruction for the target object.

For example, in a case where the digital key is not used as a node (object) of the MESH network, when the configurator sends the control instruction received from the digital key to the address of the MESH network, as mentioned above, if there is no high-frequency communication link between the configurator and the target object, the control instruction cannot be sent directly to the target object but only to other objects in the MESH network. Alternatively, in a case where the digital key is used as a node in the MESH network, if there is no direct inter-node link between the digital key and the target object, the digital key cannot send the control instruction directly to the target object but can only send the control instruction to other objects (e.g., objects to which adjacent nodes correspond) in the MESH network, where the digital key has a direct inter-node link with the other objects.

In step S920, if the at least one object determines that it is not the object targeted by the control instruction, the at least one object forwards the control instruction to the target object through the inter-node links in the MESH network.

For example, usually the control instruction can carry the indication information of the target object (that is, the identification information, such as the identifier or the unicast address of the target object as mentioned above), or the control instruction and the indication information of the target object can be sent separately. If the at least one object determines that it is not the object targeted by the control instruction based on the received indication information of the target object, then forward the control instruction (and/or the indication information of the target object) to the object with which it can communicate until the control instruction is successfully sent to the target object.

That is to say, the above-mentioned inter-node links may include a forwarding path from the object that receives the control instruction to the target object, and the forwarding path includes a second object adjacent to the target object in the MESH network.

At this time, the method 900 may further include the step in which: after the target object receives the control instruction, the target object sends instructions related to the control instruction to the second object.

For example, the control instruction may include a vehicle search instruction, and after the target object receives the control instruction, the target object sends a reminder instruction to the second object, so that the second object performs a reminder operation to indicate an approximate orientation of the target object. For example, the objects are all vehicles, and the reminder instruction can be a whistle instruction or a flashing light instruction, so that after the user hears the whistle or sees the light, the user can determine the approximate orientation of the target vehicle according to the position of the second object whistling or flashing lights, and the position of the target vehicle can be found along with the position of the second object. The target vehicle can also whistle or flash lights based on the control instruction.

For example, the control instruction may include a vehicle locking instruction, and the instructions related to the control instruction include a whistle instruction or a flashing light instruction, and after the target object receives the vehicle locking instruction, the target object sends the whistle instruction or the flashing light instruction (such as the instruction of controlling the second object to perform whistling or flashing lights) to the second object, so that the second object performs the operation of whistling or flashing lights to indicate the approximate orientation of the target object. For example, the objects are all vehicles, and after the user hears the whistle or sees the light, the user can determine the approximate orientation of the target vehicle according to the position of the second object whistling or flashing lights, and the position of the target vehicle can be found along with the position of the second object. The target vehicle can also whistle or flash lights based on the control instruction.

Alternatively, the above-mentioned inter-node links includes a first forwarding path and a second forwarding path from the object that receives the control instruction to the target object. The first forwarding path includes a second object adjacent to the target object in the MESH network, and the second forwarding path includes a fourth object adjacent to the target object in the MESH network, and a third object adjacent to the fourth object.

At this time, the method 900 may further include the step in which: after the target object receives the control instruction via the first forwarding path and the second forwarding path respectively, the target object sends instructions related to the control instruction to the second object and the fourth object respectively.

Optionally, the control instruction includes a vehicle search instruction or a vehicle locking instruction, and after the target object receives the vehicle search instruction or the vehicle locking instruction, the target object sends a reminder instruction to the second object and the fourth object, so that the second object and the fourth object perform a reminder operation to indicate an approximate orientation of the target object.

Further, the fourth object can send the reminder instruction to the third object, so that the third object and the fourth object both perform the reminder operation to form a reminder chain (for example, both whistle or both flash lights), thereby indicating the approximate orientation of the target object, which is very advantageous when the target object is far away from the digital key.

For example, the objects are all vehicles, and the reminder instruction can be a whistle instruction or a flashing light instruction, so that after the user hears the whistle from the closer third object and the farther fourth object or sees the light thereof, the user can determine the approximate orientation of the target vehicle according to the positions of the two objects whistling or flashing lights, and the position of the target vehicle can be found along with the positions of the closer third object and the farther fourth object. The target vehicle can also whistle or flash lights based on a control instruction.

That is to say, since each node (object) may have multiple adjacent nodes (objects), the node of the target object may receive a control instruction forwarded by multiple paths, so after receiving the control instruction forwarded by these paths, the target object may respectively return the instructions related to the control instruction to the adjacent nodes of the node of the target object on these paths (for example the nodes corresponding to the second object and the fourth object mentioned above), and then these adjacent nodes can further forward the instructions related to the control instruction again to their adjacent nodes, and so on. Optionally, the node of the target object may return instructions related to the control instruction to all adjacent nodes or only to the adjacent nodes on the forwarding paths on which the control instruction is received within a predetermined time period from the first reception of the control instruction.

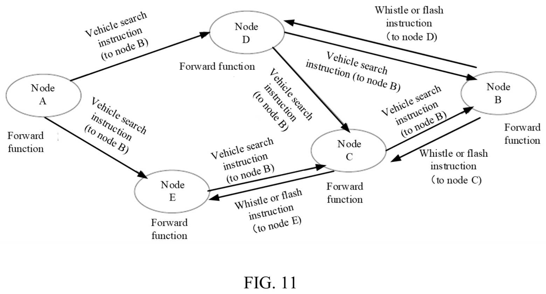

FIG.10 to FIG. 11 show schematic diagrams of forwarding a control instruction via inter-node links in the MESH network, and take the control instruction including a vehicle search instruction and the reminder instruction including a whistle instruction or a flashing light instruction as an example. In addition, in FIG.10 and FIG. 11, node A is taken as the digital key corresponding to the target vehicle and node B is the target object as an example (for the case where the digital key is configured in the MESH network), but it should be understood that node A can also be considered as a node that receives the control instruction for the target object from the configurator (for the case where the digital key is not configured in the MESH network).

As shown in FIG. 10, within a predetermined time period, node B continuously receives the vehicle search instruction sent by node A multiple times. Node B can send the reminder instruction, such as the whistle instruction or the flashing light instruction, to adjacent nodes of node B (such as node C and node D) on the forwarding path from node A to node B. The adjacent nodes of node B can be retrieved from a record list of nodes from which node B received the control instruction.

As shown in FIG. 11, node C, after receiving a reminder instruction (such as a whistle instruction or a flashing light instruction) from node B, can continue to send the reminder instruction to its adjacent nodes (e.g., node E).

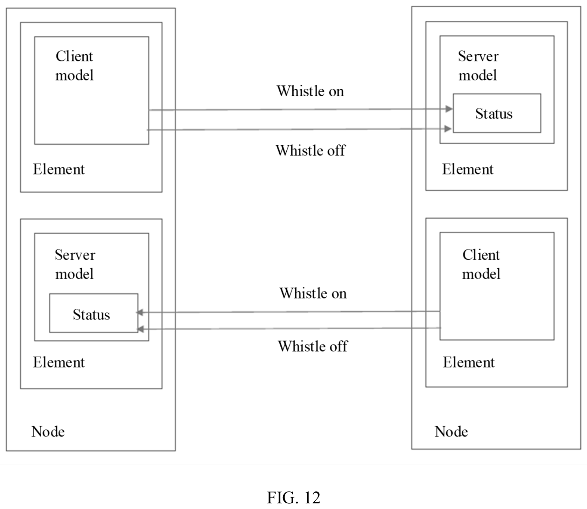

Optionally, when node B sends the whistle instruction to node C or node D, a model needs to be built at each node, such as shown in FIG. 12. FIG. 12 shows a schematic diagram of a model provided at a node for mutual control of whistle operations between the nodes.

Node B includes a client model and a server model. Correspondingly, node C also includes a similar client model and server model. Node B, when it needs to control node C through the whistle instruction, uses its client model and enables and disables the whistle operation at node C by controlling a value of a status attribute in the server model in node C. Alternatively, in other applications, node B may be controlled by node C to perform the whistling operation, in which case node C uses its client model and enables and disables the whistle operation at node B by controlling a value of a status attribute in the server model in node B.

Therefore, in this way, when the digital key cannot directly send the control instruction to the target object, the control instruction can be forwarded to the target object through at least one object in the MESH network, thereby controlling the target object. In addition, the target object can return instructions related to the control instruction to its adjacent nodes, such as reminder instructions, so that the user can find the target object according to the reminder, which is very beneficial when the vehicle owner needs to find the vehicle and improves the user experience.

According to another aspect of the present disclosure, an object control system is also provided.

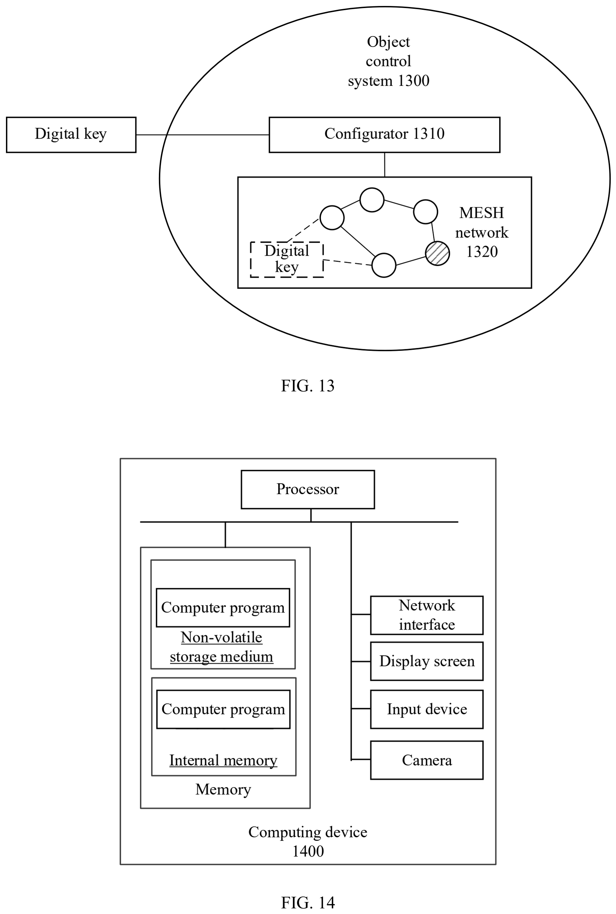

FIG. 13 shows a schematic block diagram of an object control system according to embodiments of the present disclosure. Compared with the system shown in FIG. 2, this system can have more vehicles (to form the MESH network) and more first devices, and additionally have a configurator.

The object control system 1300 may include a configurator 1310 and a MESH network 1320 for implementing control of a target object by a digital key, where the target object is a node configured into the MESH network 1320 through the configurator 1310.

The configurator 1310 may be used to configure the target object into the MESH network. For example, the configurator 1310 may receive a broadcast frame sent by the target object, the broadcast frame carrying network engagement related information of the target object, and the configurator 1310 may configure, based on the target object Entry-related information, the target object into the MESH network. For example, based on the manufacturer information of the target object, the target object can be configured to a MESH network where objects having the same manufacturer as the target object are located.

Optionally, as mentioned above, the digital key corresponding to the target object is also configured as a node in the MESH network where the target object is located.

The MESH network 1320 may be used to send a control instruction from the digital key corresponding to the target object to the target object.

For example, at least one object in the MESH network receives, from the digital key corresponding to the target object, a control instruction for the target object; and the at least one object forwards the control instruction to the target object via inter-node links in the MESH network, if the at least one object determines that it is not the object targeted by the control instruction.

More details of the operations performed in the configurator 1310 and the MESH network 1320 can be referred to the previous description.

For example, before configuring the target object into the MESH network, the configurator 1310 receives the identity authentication information sent by the target object and authenticates the identity authentication information.

When configuring the target object into the MESH network, the configurator 1310 may configure the target object into the MESH network according to a preset network configuration manner based on the network engagement related information, where the MESH network includes a plurality of objects including the target object. For example, the configurator 1310 determines the MESH network corresponding to the target object according to the preset network configuration manner based on the network engagement related information of the target object, and then communicates with the target object to send network configuration data of the MESH network corresponding to the target object to the target object, so as to configure the target object into the MESH network. After the network configuration is completed, the configurator 1310 notifies the digital key corresponding to the target object of the address information about the MESH network into which the target object is configured.

When sending the control instruction by using the MESH network, if the digital key is not configured into the MESH network into which the target object is configured, the configurator 1310 receives, from the digital key, the control instruction and the identification information of the target object; determines, based on the identification information of the target object, an address of the MESH network into which the target object is configured; and sends the control instruction to the address of the MESH network into which the target object is configured, for sending the control instruction to the target object through the MESH network.

Alternatively, the configurator may be a device that has a data processing function as well as a communication function and can be controlled by a corresponding server. The configurator may include various modules or further sub-modules for performing the above various operations. For example, the configurator may include one or more of a sending module, a receiving module and a processing module. For example, the receiving module may be used to receive the broadcast frame sent by the target object, and the processing module can configure the target object into the MESH network based on the network engagement related information of the target object, and the sending module can send, to the digital key corresponding to the target object, address information of the MESH network into which the target object is configured, etc.

Of course, each module can also be divided to include more sub-modules according to different functions or operations, or individual modules can be combined into a new module. In some example embodiments, a module or sub-modules thereof may be implemented with electronic hardware (e.g., a general purpose processor, a digital signal processor (DSP), an application-specific integrated circuit (ASIC), an off-the-shelf programmable gate array (FPGA) or other programmable logic device, discrete gate or transistor logic, discrete hardware components, etc.), computer software (e.g., that may be stored in random access memory (RAM), flash memory, read only memory (ROM), erasable programmable ROM (EPROM), etc.), or a combination of the two.

Optionally, when the target object is a vehicle, the configurator may be a gate machine at an entrance of a parking lot, and the configurator 1310 may initiate the MESH network configuration function in response to detection of a vehicle's license plate (either by an independent license plate identification system or by a license plate identification system integrated with the configurator).

When sending the control instruction by using the MESH network, if the digital key is configured into the MESH network into which the target object is configured, the configurator 1310 receives network engagement related information from the digital key corresponding to the target object, where the network engagement related information of the digital key includes at least one of the following: address information of the MESH network, identification information of the target object, or identification information of the digital key. The configurator 1310 then configures, based on the network engagement related information of the digital key, the digital key to the same MESH network as the target object. For example, the configurator 1310 determines, based on the network engagement related information of the digital key, the MESH network into which the target object is configured, and configures the digital key to the same MESH network as the target object. The digital key may also broadcast its beacon and include network engagement related information in the beacon.

In this way, the digital key in the MESH network can send a control instruction to the target object via at least one object in the MESH network.

As another example, for more details regarding the operations performed by the MESH network, reference may be made to the description above with reference to FIG. 9 to FIG. 12.

The MESH network can be composed of a plurality of objects, and each object includes: a processor; and a memory having computer-readable instructions stored thereon, the instructions on memories of the plurality of objects, when executed, causing processors of the plurality of objects to collectively perform various operations as described for the MESH network.

For example, each object is also a device that has a data processing function and a communication function and can be controlled through a corresponding server, including various modules or further sub-modules for performing the above various operations, such as a sending module, a receiving module, and a processing module. Of course, each module can also be divided to include more sub-modules according to different functions or operations, or individual modules can be combined into a new module. In some example embodiments, a module or sub-modules thereof may be implemented with electronic hardware (e.g., a general purpose processor, a digital signal processor (DSP), an application-specific integrated circuit (ASIC), an off-the-shelf programmable gate array (FPGA) or other programmable logic device, discrete gate or transistor logic, discrete hardware components, etc.), computer software (e.g., that may be stored in random access memory (RAM), flash memory, read only memory (ROM), erasable programmable ROM (EPROM), etc.), or a combination of the two.

FIG. 14 shows a schematic block diagram of a computing device according to embodiments of the present disclosure. The computing device may be a configurator or an object at each node in the MESH network.

As shown in FIG. 14, the computing device 1400 includes one or more processors, one or more memories, network interfaces, input devices, and a display screen connected through a system bus. Among them, each memory includes a non-volatile storage medium and an internal memory. The non-volatile storage medium of the computing device stores an operating system and may also store a computer-executable program. When the computer-executable program is executed by a processor, it may cause the processor to implement various operations of the method for controlling a target object by using a MESH network as described above. The internal memory may also store a computer-executable program. When the computer-executable program is executed by the processor, it may cause the processor to perform various operations of the method as described above.

Each processor can be an integrated circuit chip with signal processing capabilities. The above-mentioned processor can be a general-purpose processor, a digital signal processor (DSP), an application-specific integrated circuit (ASIC), an off-the-shelf programmable gate array (FPGA) or other programmable logic devices, discrete gate or transistor logic devices, or discrete hardware components. The methods, steps and logical block diagrams disclosed in the embodiments of the present disclosure can be implemented or executed. The general-purpose processor can be a microprocessor or the processor can also be any conventional processor, etc., and can be of X84 architecture or ARM architecture.

The non-volatile memory may be read-only memory (ROM), programmable read-only memory (PROM), erasable programmable read-only memory (EPROM), electrically erasable programmable read-only memory (EEPROM) or flash memory. It should be noted that the memory for implementing the methods described herein is intended to include, without being limited to, these and any other suitable categories of memory.

The display screen of the computing device can be a liquid crystal display screen or an electronic ink display screen, and the input device of the computing device can be a touch layer covered on the display screen, or a key, trackball or touch pad provided on the computing device shell, or it can be an external keyboard, trackpad or mouse, etc.

The computing device may be a terminal or a server. Among them, the terminal may include but are not limited to: a smartphone, a tablet computer, a notebook computer, a desktop computer, a smart TV, etc.; A variety of clients (applications, APPs) can be run in the terminal, such as multimedia playback clients, social clients, browser clients, information flow clients, education clients, etc. The server can be an independent physical server, or a server cluster or distributed system composed of multiple physical servers, or a cloud server which can provide cloud services, cloud databases, cloud computing, cloud functions, cloud storage, network services, cloud communications, middleware services, domain name services, security services, CDN, and basic cloud computing services such as big data and artificial intelligence platforms.

According to another aspect of the present disclosure, a computer-readable storage medium is also provided, which stores a computer program, when executed by a processor, causes the processor to execute respective steps of the method as described above.

According to another aspect of the present disclosure, a computer program product is also provided, including a computer program, when executed by a processor, causes the processor to execute respective steps of the method as described above.

It should be noted that the flowcharts and block diagrams in the accompanying drawings illustrate the architecture, functions and operations of possible implementations of methods and apparatuses according to various embodiments of the present disclosure. In this regard, each block in the flowchart or block diagrams may represent a module, segment, or portion of code, which comprises at least one executable instruction for implementing the specified logical function(s). It should also be noted that, in some alternative implementations, the functions noted in the block may occur out of the order noted in the drawings. For example, two blocks shown in succession may, in fact, be executed substantially concurrently, or the blocks may sometimes be executed in a reverse order, depending upon the functionality involved. It will also be noted that each block of the block diagrams and/or flowchart, and combinations of blocks in the block diagrams and/or flowchart, can be implemented by special purpose hardware-based systems that perform the specified functions or operations, or combinations of special purpose hardware and computer instructions.

The exemplary embodiments of the present disclosure described in detail above are illustrative only and not restrictive. It should be understood by those skilled in the art that various modifications and combinations can be made to these embodiments or features thereof without departing from the principles and spirit of the present disclosure, and such modifications should fall within the scope of the present disclosure.

## Claims

1. A method for controlling a target object by using a MESH network, comprising:
configuring, by a configurator, the target object into the MESH network; and
sending, to the target object and by using the MESH network, a control instruction from a digital key corresponding to the target object.

2. The method of claim 1, wherein configuring, by the configurator, the target object into the MESH network comprises:
receiving, by the configurator, a broadcast frame sent by the target object, wherein the broadcast frame carries network engagement related information of the target object;
configuring, by the configurator, the target object into the MESH network based on the network engagement related information of the target object.

3. The method of claim 1, prior to configuring, by the configurator, the target object into the MESH network, the method further comprising:
receiving, by the configurator, identity authentication information sent by the target object, and authenticating the identity authentication information.

4. The method of claim 2, wherein configuring, by the configurator, the target object into the MESH network based on the network engagement related information of the target object comprises:
configuring, by the configurator, the target object into the MESH network according to a preset network configuration manner based on the network engagement related information, wherein the MESH network includes a plurality of objects including the target object; and
notifying, by the configurator, the digital key corresponding to the target object of the address information of the MESH network into which the target object is configured.

5. The method of claim 4, wherein configuring, by the configurator, the target object into the MESH network according to a preset network configuration manner based on the network engagement related information, comprising:
determining, by the configurator, the MESH network corresponding to the target object according to the preset network configuration manner based on the network engagement related information of the target object; and
communicating with the target object by the configurator, for sending, to the target object, network configuration data of the MESH network corresponding to the target object to configure the target object into the MESH network.

6. The method of claim 4, wherein the preset network configuration manner comprises at least one of:
a same MESH network includes objects from a same manufacturer;
a same MESH network includes objects of a same brand;
a same MESH network includes objects of a same model;
each MESH network includes a same number of objects;
each MESH network includes an increasing number of objects; or
in a case where respective locations in an object distribution map are pre-grouped, objects at the locations of each group belonging to a same MESH network.

7. The method of claim 1, wherein sending, to the target object and by using the MESH network, a control instruction from a digital key corresponding to the target object comprises:
receiving, by the configurator and from the digital key, the control instruction and identification information of the target object;
determining, by the configurator and based on the identification information of the target object, an address of the MESH network into which the target object is configured; and
sending, by the configurator, the control instruction to the address of the MESH network into which the target object is configured, for transmission to the target object through the MESH network.

8. The method of claim 1, further comprising:
receiving, by the configurator, network engagement related information from the digital key corresponding to the target object, wherein the network engagement related information of the digital key includes at least one of the following: address information of the MESH network, identification information of the target object, or identification information of the digital key; and
configuring, by the configurator, the digital key into the same MESH network as the target object based on the network engagement related information of the digital key.

9. The method of claim 8, wherein the digital key and the target object establish a high-frequency communication link before the target object is configured into the MESH network, and
the target object sends address information of the MESH network to the digital key based on the high-frequency communication link, after the target object is configured into the MESH network.

10. The method of claim 8, wherein configuring, by the configurator, the digital key into the same MESH network as the target object based on the network engagement related information of the digital key comprises:
determining, by the configurator and based on the network engagement related information of the digital key, the MESH network into which the target object is configured, and configuring the digital key into the same MESH network as the target object.

11. The method of claim 8, wherein sending, to the target object and by using the MESH network, a control instruction from the digital key corresponding to the target object comprises:
transmitting, by the digital key in the MESH network, the control instruction to the target object via at least one object in the MESH network.

12. The method of claim 1, wherein the target object is a vehicle and the configurator is a gate machine at an entrance of a parking lot,
wherein the method further comprises:
initiating, by the configurator, a MESH network configuration function in response to detecting a license plate of any vehicle.

13. A method for controlling a target object by using a MESH network, the MESH network comprising a plurality of objects including the target object, the method comprising:
receiving, by at least one object in the MESH network, a control instruction for the target object from a digital key corresponding to the target object;
forwarding, by the at least one object, the control instruction to the target object via inter-node links in the MESH network in a case where the at least one object determines that it is not an object targeted by the control instruction.

14. The method of claim 13, further comprising:
receiving, by the at least one object and from the digital key, identification information of the target object associated with the control instruction,
determining, by the at least one object and according to the identification information of the target object, that it is not the object targeted by the control instruction.

15. The method of claim 13, wherein the MESH network includes the digital key or does not include the digital key.

16. The method of claim 13, wherein the inter-node links includes at least one forwarding path on which a second object in the MESH network is included, and
wherein the method further comprises: after the target object receives the control instruction, sending, by the target object and to the second object, instructions related to the control instruction.

17. The method according to claim 16, wherein the control instruction includes a vehicle search instruction or a vehicle locking instruction, and after the target object receives the control instruction, the target object sends a reminder instruction to the second object to cause the second object to perform a reminder operation to indicate an approximate orientation of the target object.

18. The method of claim 13, wherein the inter-node links comprises a first forwarding path and a second forwarding path, the first forwarding path including thereon a second object in the MESH network and the second forwarding path including thereon a third object and a fourth object in the MESH network, and
wherein the method further comprises: after the target object receives the control instruction via the first forwarding path and the second forwarding path respectively, sending, by the target object, instructions related to the control instruction to the second object and the fourth object respectively.

19. The method of claim 18, wherein the control instruction includes a vehicle search instruction or a vehicle locking instruction, and
wherein, after the target object receives the vehicle search instruction or the vehicle locking instruction, sending a reminder instruction by the target object to the second object and the fourth object, so that the second object and the fourth object perform a reminder operation to indicate an approximate orientation of the target object.

20. The method of claim 19, wherein the method further comprises:
further sending, by the fourth object, the reminder instruction to the third object, to cause the third object and fourth object to perform the reminder operation to form a reminder chain, to indicate the approximate orientation of the target object.

21. An object control system, comprising:
a configurator configured to configure a target object into a MESH network; and
the MESH network, configured to send, to the target object, a control instruction of a digital key corresponding to the target object.

22. The system of claim 21, wherein the configurator, when configuring the target object into the MESH network, is configured to:
receive a broadcast frame sent by the target object, the broadcast frame carrying network engagement related information of the target object, and
configure, based on the network engagement related information of the target object, the target object into the MESH network.

23. The system of claim 22, wherein
configuring, by the configurator, the digital key into the same MESH subnet as the target object.

24. The system of claim 22, wherein:
at least one object in the MESH network receives, from the digital key corresponding to the target object, the control instruction for the target object;
the at least one object forwards the control instruction to the target object via inter-node links in the MESH network, in a case where the at least one object determines that it is not the object targeted by the control instruction.

25. A MESH network comprising a plurality of objects and each object comprising:
a processor; and
a memory having computer readable instructions stored thereon,
wherein instructions on memories of the plurality of objects, when executed, cause processors of the plurality of objects to collectively perform the method of any of claims 13-20.
